# EUROPÄISCHE PATENTANMELDUNG

(11) **EP 0 795 988 A2**
(43) Veröffentlichungstag der Anmeldung: **17.09.1997**
(21) Anmeldenummer: 97104067.0
(22) Anmeldetag: 11.03.1997
(51) Int. Cl.: H04M 1/66, H04M 3/38

(54) **Verfahren und Anordnung zur Einschränkung der Wahlberechtigung von Kommunikationsendgeräten**

(30) Priorität: 15.03.1996 DE 19610287
(71) Anmelder: SIEMENS AKTIENGESELLSCHAFT, 80333 München (DE)
(72) Erfinder: Spahl, Siegfried, Dipl.-Ing., 82178 Puchheim (DE); Lukas, Günter, Ing., 2000 Oberzögersdorf (AT)

(57) **Zusammenfassung**

In einer an ein Kommunikationssystem (KS) angeschlossenen Applikationseinrichtung (PC) sind Personenidentifikationsinformationen (pin1..n) die Wahlberechtigung einschränkende Informationen (wi..) zugeordnet. In dieser wird eine während eines Verbindungsaufbaus angegebene Personenidentifikationsinformation (pin) bewertet und der Verbindungsaufbau unter Berücksichtigung der angegebenen, eingeschränkten Wählmöglichkeiten durchgeführt. Hierdurch ist eine flexibles Konfigurieren unterschiedlichster Wahlberechtigungen für Benutzer von Kommunikationsendgeräten (KE) möglich.

## Beschreibung

Für eine Steuerung von Leistungsmerkmalen in Kommunikationsnetzen, insbesondere privaten Kommunikationsnetzen, ist eine Kopplung der Kommunkationssysteme, insbesondere private Nebenstellenanlagen, mit einer Datenverarbeitungsanlage über eine Applikationsschnitte bzw. ACL-Schnittstelle (Applications Connectivity Link) vorgesehen. Gemäß dieser Applikationsschnittstelle ACL ist physikalisch das private Kommunkationssystem, beispielsweise das private Kommunkationssystem HICOM 300 der Fa. Siemens, über eine V.24-Schnittstelle oder alternativ über eine ISDN-Basisschnittstelle (S0) mit der Datenverarbeitungsanlage verbunden. Die Applikationsschnittstelle ACL ist vorzugsweise in einer Betriebstechnik-Einheit - beim Kommunkationssystem HICOM 300 ein integrierter Betriebstechnik-Server - eines Kommunkationssystems realisiert und steuert den Kommunikationsaustausch gemäß einem definierten Protokoll - z.B. MSV1 - mit definierten Meldungen. Die in die Meldungen eingebetteten Informationen entsprechen den vermittlungstechnischen Anweisungen und Ereignismeldungen des Kommunkationssystems. Als Bindeglied zwischen der Datenverarbeitungsanlage und dem Kommunkationssystem ist in diesem eine zur Ausführung der vermittlungstechnischen Anweisungen und zum Generieren der vermittlungstechnischen Ereignismeldungen geeignete, d.h. eine DVA-gesteuerte Verbindungsaufbauten unterstützende Programmstruktur vorgesehen, wobei durch die vermittlungstechnischen Anweisungen die Verbindungsteuerung beeinflußt und durch vermittlungstechnische Ereignismeldungen der aktuelle vermittlungstechnische Zustand von Verbindungen angezeigt wird.

In privaten Kommunkationsnetzen sind für bestimmte, an die Kommunkationssysteme angeschlossene Kommunikationsendgeräte - z.B. in Besprechungszimmern - keine feste Zuordnung zu Teilnehmern bzw. Personen vorgesehen. Derartige Kommunikationsendgeräte sollen von unterschiedlichsten Personen mit unterschiedlichen, individuellen Wahlberechtigungen, d.h. auch eingeschränkten Wahlberechtigungen benutzt werden können.

Die der Erfindung zugrundeliegende Aufgabe besteht darin, Kommunkationssysteme mit flexiblen, personenindividuellen Wahlberechtigungen für angeschlossene Kommunikationsendgeräte auszugestalten. Die Aufgabe wird durch die Merkmale des Anspruchs 1 gelöst.

Der wesentliche Aspekt des erfindungsgemäßen Verfahrens ist darin zu sehen, daß in einer über eine Applikationsschnittstelle an das Kommunikationssystem angeschlossenen prozessorgesteuerten Applikationseinrichtung Personenidentifikationsinformation, für die eine eingeschränkte Wahlberechtigung vorgesehen ist, eine die Wählmöglichkeiten einschränkende Information zugeordnet ist. Mit Hilfe des Kommunikationssystems und der Applikationseinrichtung wird eine während eines eingeleiteten Verbindungsaufbaus eingegebene Personenidentifikationsinformation von einem der vorgesehenen Kommunikationsendgeräte zur Applikationseinrichtung gesteuert und der eingeleitete Verbindungsaufbau wird unter Berücksichtigung der angegebenen, eingeschränkten Wählmöglichkeiten durchgeführt. Ein wesentlicher Vorteil des erfindungsgemäßen Verfahrens ist darin zu sehen, daß personenindividuelle, unterschiedliche bzw. eingeschränkte Wahlberechtigungen ohne vermittlungstechnische Änderungen im Kommunkationssystem realisiert werden können. Durch komfortable Bedieneroberflächen an der Applikationseinrichtung, die vorteilhaft durch einen Personalcomputer realisiert ist, sind die Berechtigungen bzw. eingeschränkten Berechtigungen beliebig konfigurierbar, wodurch eine größtmögliche Flexibilität bei der Zuordnung von eingeschränkten Berechtigungen erreicht wird. Desweiteren ist durch die Verwendung einer Personenidentifikationsinformation und der Zuordnung von die Wahlberechtigung einschränkenden Informationen eine weitgegende Entkopplung vom aktuell benutzten Kommunikationsendgerät erreicht.

Die die Wählmöglichkeiten einschränkenden Information ist gemäß einer vorteilhaften Weiterbildung des erfindungsgemäßen Verfahrens durch eine Information repräsentiert, durch die eingeleitete Verbindungsaufbauten nur zu Kommunikationsendgeräten innerhalb des privaten Kommunikationsnetzes möglich sind - Anspruch 2 - oder durch die eingeleitete Verbindungsaufbauten nur zu Kommunikationsendgeräten im Ortsbereich des öffentlichen Kommunkationssystems möglich sind - -Anspruch 3 - oder durch zumindest eine Wählinformation repräsentiert, durch die eingeleitete Verbindungsaufbauten nur zu durch die zumindest eine Wählinformation bestimmten Kommunikationsendgeräte möglich sind - Anspruch 4. Diese unterschiedlichen Möglichkeiten für die Wählmöglichkeiten einschränkenden Informationen sind Personenidentifikationsinformation-individuell durch entprechende Eingaben an der Applikationseinrichtung einstellbar. Die die Wählmöglichkeiten einschränkenden Informationen sind gemäß einer vorteilhaften Weiterbildung auch Gruppen von Personenidentifikationsinformationen oder Kommunikationsendgeräten zuordenbar - Anspruch 6.

Bei mehreren, einer Personenidentifikationsinformation zugordneten Wählinformationen werden gemäß einer weiteren vorteilhaften Ausgestaltung des erfindungsgemäßen Verfahrens diese mit Hilfe der Applikationseinrichtung und des Kommunikationssystems an das die Personenidentifikationsinformation übermittelnde Kommunikationsendgerät übermittelt und dort akustisch oder optisch angezeigt. Nach einer am Kommunikationsendgerät bewirkten Auswahl einer Wählinformation wird ein Verbindungsaufbau zu dem durch die ausgewählte Wählinformation bestimmten Kommunikationsendgerät eingeleitet - Anspruch 5. Diese Variante kommt insbesondere für Kommunikationsendgerät in betracht, bei denen eine eine Personenidentifikationsinformation eingebende Personen nur zu bestimmten Kommunikationsendgeräten Kommunikationsverbindungen aufbauen kann.

Weitere vorteilhafte Ausgestaltungen des erfindungsgemäßen Verfahrens sowie eine Ausgestaltung einer Anordnung zur Durchführung des erfindungsgemäßen Verfahrens sind den weiteren Ansprüchen zu entnehmen.

Im folgenden wird das erfindungsgemäße Verfahren anhand eines Blockschaltbildes näher erläutert. Das Blockschaltbild zeigt ein Kommununikationssystem KS - insbesondere ein privates Kommunkationssystem - mit einer ACL-(Applications Connectivity Link) Schnittstelle ACL, über die eine durch einen Personalcomputer realisierte Applikationseinrichtung PC - im weiteren mit Personalcomputer PC bezeichnet - angeschossen ist. Im Kommunkationssystem KS ist die ACL-Schnittstelle ACL durch eine in einem integrierten Betriebstechnik-Server ISP implementierte ACL-Programmstruktur ACLP realisert; im Personalcomputer PC ist die ACL-Schnittstelle ACL in dessen Steuereinrichtung ST vorgesehen. Die Abkürzung ACL steht für Applications Connectivity Link und bedeutet, daß über diese ACL-Schnittstellen ACL ein Kommunikationsaustausch für eine applikationsabhängige Verbindungssteuerung über eine Verbindung, d.h. einen Link gesteuert wird. Im Personalcomputer PC ist eine das erfindungsgemäße Verfahren mitrealisiserende Wahlberechtigungs-Programmstruktur WBP implementiert.

Das Kommunkationssystem KS weist für die vermittlungstechnische sowie betriebstechnische Steuerung eine Steuereinrichtung ST auf, die mit einem Koppelfeld KF und dem integrierten Betriebstechnik-Server ISP verbunden ist. In der Steuereinrichtung ST ist neben den nicht dargestellten, wesentlichen vermittlungs- und betriebstechnischen Programmen eine DVA-gesteuerte Verbindungsaufbauten unterstützende Programmstruktur DGV für eine Zusammenarbeit mit dem Personalcomputer PC vorgesehen.

Im Koppelfeld KF ist mit Hilfe der Steuereinrichtung St eine Verkehrsbeziehungsgruppe VBZ konfiguriert, d.h. eingerichtet, der an das Kommunkationssystem KS anschließbare Kommunikationsendgeräte KE zugeordnet sind - beispielhaft sind zwei Kommunikationsendgerät KE dargestellt. Die Kommunikationsendgeräte KE sind über nicht dargestellte Teilnehmeranschlußmodule mit dem Koppelfeld KF verbunden. Die Kommunikationsendgeräte KE sind mit einer Bedienerobefläche BOF - z.B. Wähltastatur - ausgestattet, mit der Personenidentifikationsinformationen pin oder Wählinformationen wi eingegeben werden. Die Kommunikationsendgeräte KE umfassen jeweils eine Anzeigeeinheit AZE sowie eine Folge- und eine Bestätigungstaste FT,BT. Die Anzeigeeinheit AZE ist beispielsweise durch eine LCD-Anzeige realisiert.

Durch die DVA-gesteuerte Verbindungsaufbauten unterstützende Programmstuktur DGV werden alle vermittlungstechnischen Ereignisse vei - im Ausführungsbeispiel die von den der Vekehrsbeziehungsgruppe VBZ zugeordneten Kommunikationsendgeräten KE - erfaßt und über die ACL-Schnittstelle ACL an die Wahlberechtigungs-Programmstruktur WBP übermittelt. Analog hierzu werden von der Wahlberechtigungs-Programmstruktur WBP übermittelte, vermittlungstechnische Anweisungen amo durch die DVA-gesteuerte Verbindungaufbauten unterstützende Programmstruktur DGV ausgeführt, d.h. die angegebenen vermittlungstechnischen Aktivitäten eingeleitet. Bezogen auf das Ausführungsbeispiel werden von den Kommunikationsendgeräten KE eingeleitete Verbindungsaufbauten erfaßt und eine im Rahmen des Verbindungsaufbaus vom Kommunikationsendgerät KE übermittelte, an der Bedieneroberfläche BOF eingegebene Personenidentifikationsinformation pin über die ACL- Schnittstelle ACL an die Wahlberechtigungs-Programmstruktur übermittelt.

Die DVA-gesteuerte Verbindungsaufbauten unterstützende Programmstruktur DGV ist alternativ in einen 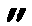 pin-Monitoring 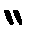 -Betrieb einstellbar, bei dem insbesondere während eines Verbindungsaufbaus die von den zugeordneten Kommunikationsendgeräten eingegebenen Personenidentifikationsinformationen pin erfaßt und durch jeweils eine Meldung vei an den Personalcomputer PC übermittelt werden. Dieses Melden von eingegebenen Personenidentifikationsinformationen pin übernimmt eine programmtechnisch realisierte Monitoringroutine MR - durch strichlierte Linien angedeutet-, die durch entsprechende administrative Eingaben am Kommunikationssystem KS für die jeweilige Verkehrsbeziehungsgruppe VBZ aktiviert wird.

In der Wahlberechtigungs-Programmstruktur WBP sind Personenidentifikationsinformationen pin1..n eingetragen, denen jeweils Wählinformationen wi.. zugordnet sind. Hierbei ist von jeder Person, für die eine eingeschränkte Wahlberechtigung vorgesehen ist, die jeweilige Personenidentifikationsinformation pin in eine Tabelle TAB eingefügt. Für das Ausführungsbeispiel sei angenommen, daß durch die zugeordneten Wählinformationen wi.. diejenigen Kommunikationsendgeräte KE bestimmt sind, zu denen das einen Verbindungsaufbau einleitende Kommunikationsendgerät KE eine Verbindung aufbauen kann.

Erfindungsgemäß werden die zugeordneten Wählinformationen wi über die ACL-Schnittstelle mit Hilfe des Kommunkationssystems KS an die Anzeigeeinheit AZE des den jeweiligen Verbindungsaufbau einleitenden Kommunikationsendgerätes KE übermittelt - durch strichlinierte Linien angedeutet - und dort angezeigt. In dem jeweiligen Kommunikationsendgerät KE wird mit Hilfe der Folgetaste FT aus den angezeigten Wählinformationen wi.. durch Scrollen der Wählinformationen wi.. eine gewünschte ausgewählt und durch Betätigen der Bestätigungstaste BT ein Verbindungsaufbau zu dem durch die ausgewählte Wählinformation wi.. bestimmte Kommunikationsendgerät KE eingeleitet.

Ist einer Personenidentifikationsinformation pin lediglich eine Wählinformation wi zugeordnet, so kann ein Anzeigen der Wählinformation wi in dem jeweiligen Kommunikationsendgerät KE unterbleiben und direkt ein Verbindungsaufbau zu dem durch die Wählinformation wi bestimmten Kommunikationsendgerät KE eingeleitet werden. Die Entscheidung, ob eine Übermittlung der Personenidentifikationsinformation pin oder sofort ein Verbindungsaufbau zu einem Kommunikationsendgerät KE eingeleitet wird, wird durch die Wahlberechtigungs- Programmstruktur WBP ermittelt. Der Verbindungsaufbau wird durch Bilden und Übermitteln entsprechender vermittlungstechnischer Anweisungen an die im Kommunkationssystem KS implementierte DVA-gesteuerte Verbindungsaufbauten unterstützende Programmstruktur DGV übermittelt und dort mit Hilfe der Steuereinrichtung ST durchgeführt.

Bei einer weiteren Alternative des erfindungsgemäßen Verfahrens - nicht dargestellt - repräsentieren die in der Wahlberechtigungs-Programmstruktur WBP gespeicherten Wählinformationen eine Wählinformation wi, die eine "externe Verbindung" anzeigen. Bezogen auf das Ausführungsbeispiel ist beispielsweise als Wählinformation eine "0" gespeichert. Wählt eine Person nach der Eingabe seiner Personenidentifikationsinformation pin eine "0", d.h. will einen Verbindungsaufbau aus dem privaten Kommunkationssystem KS bzw. aus dem privaten Netz hinaus zu einem beispielsweise öffentlichen Kommunkationssystem KS einleiten, so wird dieser nach einer Bewertung in der Wahlberechtigungs-Programmstruktur WBP durch diese unterbunden, d.h. beim jeweiligen Kommunikationsendgerät KE wird beispielsweise "nicht berechtigt" angezeigt. Analog können die Wahlberechtigung einschränkende Informatioenen gespeichert werden, die beispielsweise Verbindungsaufbauten in den Fernbereich eines öffentlichen oder privaten Kommunikationsnetzes unterbinden.

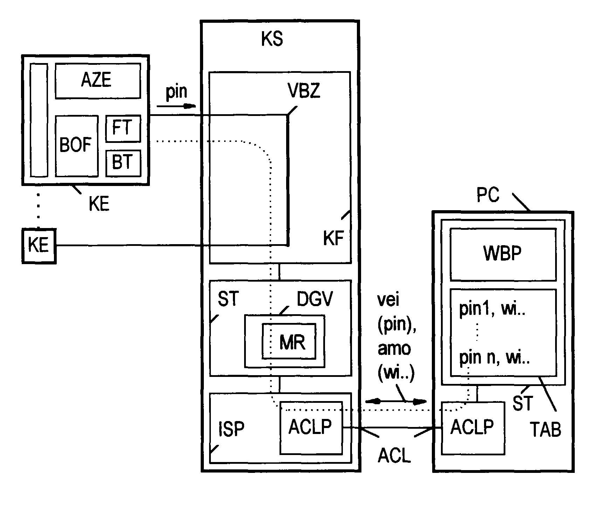

## Patentansprüche

1. Verfahren zur Einschränkung der Wahlberechtigung von hierfür vorgesehenen, an ein Kommunikationssystem (KS) angeschlossenen Kommunikationsendgeräten (KE),
- bei dem in einer über eine Applikationsschnittstelle (ACL) an das Kommunikationssystem (KS) angeschlossenen prozessorgesteuerten Applikationseinrichtung (PC) Personenidentifikationsinformation (pin1..n), für die eine eingeschränkte Wahlberechtigung vorgesehen ist, eine die Wählmöglichkeiten einschränkende Information (wi..) zugeordnet ist,
- bei dem mit Hilfe des Kommunikationssystems (KS) und der Applikationseinrichtung (PC)
-- eine während eines eingeleiteten Verbindungsaufbaus eingegebene Personenidentifikationsinformation (pin) von dem jeweiligen Kommunikationsendgerät (KE) zur Applikationseinrichtung (PC) gesteuert wird, und
-- der eingeleitete Verbindungsaufbau unter Berücksichtigung der angegebenen, eingeschränkten Wählmöglichkeiten (wi..) durchgeführt wird.

2. Verfahren nach Anspruch 1, dadurch **gekennzeichnet**,
daß bei privaten Kommunikationssystemen (KS) die die Wählmöglichkeiten einschränkenden Information durch eine Information repräsentiert ist, durch die eingeleitete Verbindungsaufbauten nur zu Kommunikationsendgeräten (KE) innerhalb des privaten Kommunikationsnetzes möglich sind.

3. Verfahren nach Anspruch 1, dadurch **gekennzeichnet**,
daß bei Anschluß des Kommunikationssystems (KS) an ein öffentliches Kommunkationssystems (KS) die die Wählmöglichkeiten einschränkenden Information durch eine Information repräsentiert ist, durch die eingeleitete Verbindungsaufbauten nur zu Kommunikationsendgeräten (KE) im Ortsbereich des öffentlichen Kommunkationssystems (KS) möglich sind.

4. Verfahren nach Anspruch 1, dadurch **gekennzeichnet**,
daß die die Wählmöglichkeiten einschränkenden Information durch zumindest eine Wählinformation (wi..) repräsentiert ist, durch die eingeleitete Verbindungsaufbauten nur zu durch die zumindest eine Wählinformation (wi..) bestimmten Kommunikationsendgeräten (KE) möglich sind.

5. Verfahren nach Anspruch 4, dadurch **gekennzeichnet**,
- daß bei mehreren, einer Personenidentifikationsinformation (pin) zugordneten Wählinformationen (wi..) diese mit Hilfe der Applikationseinrichtung (PC) und des Kommunkationssystems (KS) an das die Personenidentifikationsinformation (pin) übermittelnde Kommunikationsendgerät (KE) übermittelt und dort akustisch oder optisch angezeigt wird, und
- daß nach einer am Kommunikationsendgerät (KE) bewirkten Auswahl einer Wählinformation (wi) ein Verbindungsaufbau zu dem durch die ausgewählte Wählinformation (wi) bestimmten Kommunikationsendgerät (KE) eingeleitet wird.

6. Verfahren nach einem der vorhergehenden Ansprüche, dadurch **gekennzeichnet**,
daß die die Wählmöglichkeiten einschränkenden Information einer Gruppe von Personenidentifikationsinformationen (pin) oder Kommunikationsendgeräten (KE) zuordenbar sind.

7. Verfahren nach einem der vorhergehenden Ansprüche, dadurch **gekennzeichnet,**
daß die Personenidentifikationsinformation (pin) am Kommunikationsendgerät KE) durch Tastenbetätigung oder durch eine Chipkarte eingegeben wird.

8. Verfahren nach einem der vorhergehenden Ansprüche, dadurch **gekennzeichnet,**
- daß die für eine eingeschränkte Wahlberechtigung vorgesehenen Kommunikationsendgeräte (KE) im Kommunikationssystem (KS) einer Verkehrsbeziehungsgruppe (VBZ) zugeordnet sind, daß die im Rahmen von von Kommunikationsendgeräten (KE) eingeleiteten Verbindungsaufbauten im Kommunkationssystem (KS) auftretenden vermittlungstechnischen Ereignisse (vei) und Informationen mit Hilfe einer DVA-gesteuerte Verbindungsaufbauten unterstützende Programmstruktur (DGV) über eine Applikationsschnittstelle (ACL) an die Applikationseinrichtung (PC) übermittelt werden, und
- daß mit Hilfe einer in der Applikationseinrichtung (PC) implementierten Wahlberechtigungs-Programmstruktur (WBP) und der DVA-gesteuerte Verbindungsaufbauten unterstützende Programmstruktur (DGV) die von den Kommunikationsendgeräten (KE) eingeleiteten Verbindungsaufbauten unter Berücksichtigung der in der Applikationseinrichtung (PC) gespeicherten Informationen über die eingeschränkten Wählmöglichkeiten gesteuert werden.

9. Verfahren nach Anspruch 8, dadurch **gekennzeichnet**,
daß in der DVA-gesteuerte Verbindungsaufbauten unterstützende Programmstruktur (DGV) mit Hilfe einer Monitoringroutine MR die von den einer Verkehrsbeziehungsgruppe (VBZ) zugeordneten Kommunikationsendgeräten KE übermittelten Personenidentifikationen (pin) erfaßt und durch vermittlungstechnische Ereignismeldungen (vei) der Wahlberechtigungs-Programmstruktur (WBP) gemeldet werden.

10. Anordnung zur Einschränkung der Wahlberechtigung von hierfür vorgesehenen, an ein Kommunikationssystem (KS) angeschlossenen Kommunikationsendgeräten (KE),
- mit Teilnehmeranschlußmodulen zum Anschluß von Kommunikationsendgeräten (KE), die mit einem, eine Verkehrsbeziehungsgruppe (VBZ) realisierenden Koppelfeld (KF) und einer zentralen Steuerung (ST) verbunden sind, in der ein DVA-gesteuerte Verbindungsaufbauten unterstützende Programmstruktur (DGV) angeordnet ist,
- mit einem eine Applikationsschnittstelle (ACL) realisierenden Applikationsmodul (ACL-M), das mit der zentralen Steuerung (CC) und mit einem weiteren, in einem Personalcomputer (PC) angeordneten Applikationsmodul (ACL-M) verbunden ist, und
- mit einer die eingeschränkte Wählberechtigung steuernde Wählberechtigungsp-Programmstruktur (WBP) im Personalcomputer (PC).
